# EUROPEAN PATENT APPLICATION

(11) **EP 4 311 600 A1**
(43) Date of publication of application: **31.01.2024**
(21) Application number: 22186697.3
(22) Date of filing: 25.07.2022
(51) Int. Cl.: B01L 9/00, G01N 1/31

(54) **SAMPLE CARRIER FOR AN IMAGING DEVICE**

(71) Applicant: Leica Microsystems CMS GmbH, 35578 Wetzlar (DE)
(72) Inventor: Christ, Stefan, 35641 Schöffengrund (DE)
(74) Representative: Schaumburg und Partner Patentanwälte mbB

(57) **Abstract**

A sample carrier (100) for an imaging device (600) comprises at least two sample receiving elements (104). Each sample receiving element (104) has a sample receiving compartment (106) configured to receive a sample. The sample receiving elements (104) are either arranged in or form a frame (102). The frame (102) is configured to be received in the imaging device (600). The sample carrier (100) further comprises a temperature control unit (112) configured to control the temperature of each of the sample receiving compartments (106) individually.

## Description

### Technical field

The invention relates to a sample carrier for an imaging device.

### Background

In particular in the field of spatial omics, samples are subjected to multiple cycles of manipulation and treatment with various reagents, in order to study various biological processes. The reagents are for example probes, antibodies or chemicals. In particular, when the reagents comprise fluorophores, the reagents are also called markers. In order to observe the reaction of the samples to the treatment, the samples are imaged either during or after they have been treated with the reagents.

A single experiment may comprise multiple cycles of staining, washing, and imaging. Typically, a cycle comprises the following steps: Staining the sample with one or more reagents, annealing the reagent, washing the sample with a washing buffer, imaging the sample, bleaching markers from the first staining and/or unmasking epitopes, washing the sample with a washing buffer to remove used reagents. After the cycle has been completed, the sample may be stained again with different reagents.

A typical experimental setup comprises a dedicated microscope for imaging the sample. The staining and washing steps required are typically performed outside the microscope, either manually on a work bench or with an automated system such as an immunohistochemistry (IHC) stainer. Manually handling the samples is time consuming and considerably reduces the throughput of an experiment. Integrated solutions exist combining both a microscope and a stainer that reduce the time needed to handle the samples. However, no solution exists that integrates all steps of a staining, imaging, and washing cycle allowing for a fast and efficient handling of samples.

### Summary

It is therefore an object to provide a sample carrier for an imaging device that allows for a fast and efficient handling of samples.

The aforementioned object is achieved by the subject-matter of the independent claim. Advantageous embodiments are defined in the dependent claims and the following description.

The proposed sample carrier for an imaging device comprises at least two sample receiving elements. Each sample receiving element has a sample receiving compartment configured to receive a sample. The sample receiving elements are either arranged in a frame or are configured to form a frame. The frame is configured to be received in the imaging device. The sample carrier further comprises a temperature control unit configured to control the temperature of each of the sample receiving compartments individually.

For instance, the aforementioned frame may be obtained by plugging together several individual frame elements.

In this document, sample primarily refers to the object that is to be observed by the imaging device, for example a biological specimen. However, sample may also refer to the prepared object comprising a substrate or carrier, such as a microscope slide, on which the object is arranged.

The sample carrier may receive two or more samples, each sample being received in one of the sample receiving compartments. The temperature control unit individually controls the temperature of each of the sample receiving compartments, thereby allowing a fine control over the temperature of each of the samples. In particular antibodies and a lot of chemical probes, for example probes used in fluorescence in situ hybridization (FISH) experiments, are highly dependent on specific temperatures during the annealing process. Temperature is one of the key factors that determine the specificity and the efficiency of a staining process. Temperature is also a determining factor in the efficiency of the washing step as well as the overall speed of a staining, and washing cycle. Thus, by allowing a fine control of the temperature, in particular as a function of time, the proposed sample carrier allows a very precise control of the annealing step, thereby increasing the overall efficiency of the staining step of the staining, imaging, and washing cycle. The temperature control unit is also part of the sample carrier itself, thereby allowing to perform the annealing step in situ, i.e. inside the imaging device where the sample is also imaged. This is considerably faster than removing the samples from the imaging device in order to perform the annealing step with an external device. The sample carrier and the imaging device form part of an integrated system for performing the staining, and washing cycles as well as the imaging of the sample. Thus, overall, the proposed sample carrier facilitates fast and efficient handling of samples.

According to an embodiment, the temperature control unit is configured to heat and/or cool each of the sample receiving compartments individually. In this embodiment, the temperature of an individual sample receiving compartment is controlled by either heating or cooling the sample receiving compartment. Therefore, the sample receiving compartments might be thermally insulated from each other. Actively controlling the temperature of the sample receiving compartments is very efficient allowing an even better control over the annealing process, making the staining, washing, and imaging cycle even more efficient.

According to another embodiment, the temperature control unit comprises at least two heating elements, each heating element being configured to heat one of the sample receiving compartments. The heating element may in particular be a heating foil at least partially enclosing the sample receiving compartment or the corresponding sample receiving element. The heating element may also be a cartridge heater arranged in or at the sample receiving compartment or the corresponding sample receiving element. Heating elements, in particular electrically controlled heating elements are easy to use and allow a very precisely controlled heating.

According to another embodiment, each of the sample receiving elements comprises one of the heating elements. In this embodiment, the heating elements are part of the sample receiving elements. In particular, if the sample receiving elements can be removed from the frame, the heating elements can also be removed with the sample receiving elements, thereby allowing easy access to heating elements. This allows a user to easily maintain and replace the heating elements. Since the heating elements are the most complex elements of the sample carrier, this makes the sample carrier itself very easy to maintain.

According to another embodiment, each heating element is arranged in the frame at or next to one of the sample receiving elements. In this embodiment, the heating elements are part of the frame instead of the sample receiving elements. The sample receiving elements can therefore be designed very simply, thereby reducing the overall cost of the sample carrier. If the sample receiving elements are to be removed from the frame, providing the sample receiving elements at a low cost is essential. This allows the user to easily chose from a variety of different sample receiving elements, wherein each sample receiving element may be adapted to a specific application. Thereby, the versatility of the sample carrier is vastly increased.

According to another embodiment, the temperature control unit comprises a power interface configured to be connected to an external electrical power source, and to relay electrical power provided by the electrical power source to each of the heating elements. The power interface is preferably arranged in the frame. In this embodiment, the electrical power needed for the heating elements is provided from an external source. This eliminates the need for an internal power supply, thereby making the sample carrier lighter and reducing the overall cost of the sample carrier.

According to another embodiment, the temperature control unit comprises a liquid interface configured to be connected to an external liquid source, and is configured to selectively direct a liquid received via the liquid source around each of the sample receiving compartments in order to control the temperature of each of the sample receiving compartments independently. Alternatively, or additionally, the liquid interface is configured to selectively direct the liquid to each of the sample receiving elements. The liquid may in particular be water that is either heated or cooled by the external liquid source. In this embodiment, the temperature of each of the sample receiving compartments is controlled by the liquid which is either directed around the sample receiving compartment or directed to the corresponding sample receiving element. Using the liquid for temperature control allows for a gentle heating and/or cooling of the sample receiving compartments. A gentle temperature control is essential in reducing stress to reagents during the annealing step, thereby making the staining process more efficient, thereby further improving sample handling.

According to another embodiment, the temperature control unit comprises at least one temperature sensor configured to measure the temperature of at least one of the sample receiving compartments. The temperature sensor measures the current temperature of the sample receiving compartment. The current temperature of the sample receiving compartment may then be used by the temperature control unit to adjust the temperature of the sample receiving compartment more precisely, thereby further improving sample handling.

According to another embodiment, the temperature control unit comprises a control interface configured to be connected to a control unit of the imaging device. The control interface is preferably arranged in the frame. The control interface and the power interface may be a single element. For example, electrical power and control signals may be provided via different pins of a single connector. In this embodiment, the temperature control unit is controlled by the imaging device. This further integrates the sample carrier with the imaging device, making the handling of the samples even more easy.

According to another embodiment, at least one of the sample receiving elements is configured to receive a microscope slide. The microscope slide defines a first wall of the sample receiving compartment of the at least one sample receiving element when the microscope slide is received in the sample receiving element. Microscope slides are widely used to prepare objects, in particular biological specimen, for microscopy. Being compatible with microscope slides thereby greatly increases versatility and interoperability of the sample carrier. Further, since the microscope slide defines one wall of the sample receiving compartment, i.e. the first wall, the sample receiving compartments can be made much more compact, reducing weight and material cost of the sample carrier, and might be used for imaging a biological sample through the slide.

According to another embodiment, the at least one sample receiving element comprises a lid configured to cover the sample receiving compartment. The lid may define a second wall of the sample receiving compartment of the at least one sample receiving element when the lid covers the sample receiving compartment. The second wall is arranged on a side of the sample receiving compartment opposite to the first wall. The lid may be removable. The lid may also be fixed to the frame, for example by a hinge. When the lid covers the sample receiving compartment, the sample received therein is arranged between the lid and the first wall which may be formed by the microscope slide. Thereby, a staining and imaging chamber is formed with the help of the lid and the sample, allowing e.g. that a staining process is carried out. Furthermore, the sample is protected from the environment, which for example prevents the sample from drying out or coming into contact with pollutants in the air. However, since the lid may be either opened or removed from the sample carrier, the user may still access the sample.

According to another embodiment, the at least one sample receiving element comprises an optically transparent element for observing the sample received in the sample receiving compartment of the at least one sample receiving element. The optically transparent element may define a second wall of the sample receiving compartment of the at least one sample receiving element, the second wall being arranged on a side of the sample receiving compartment opposite to the first wall. The optically transparent element may in particular be an optically transparent plane-parallel plate. In this embodiment, sample to be imaged is arranged between the optically transparent element and the first wall which may be formed by the microscope slide. As in the above embodiment, the sample is thereby protected from the environment. Access to the sample is provided by removing the microscope slide. The optically transparent element allows the samples arranged in the sample receiving compartments to be observed by the imaging device. In other words, the optically transparent element forms a window through which the sample may be observed. This embodiment also comprises a minimal amount of movable or removable parts, thereby providing greater protection of the samples, in particular in an automated environment, for example where the sample carrier is handled by a robot.

According to another embodiment, the at least one sample receiving element comprises at least one spacer element defining a predetermined distance between the first wall and the second wall. The spacer element prevents the first wall and the second wall from being pushed together. With the help of the spacer, a staining and imaging chamber having a predefined volume can be formed. Furthermore, this prevents the sample arranged in the sample receiving compartment from being crushed, thereby further protecting the sample.

According to another embodiment, the spacer element extends around the sample receiving compartment of the at least one sample receiving element and forms a seal. In this embodiment, the first wall, the second wall, and the spacer element encompass the sample, thereby completely shielding the sample from the environment. Since the spacer element forms a seal between the first wall and the second wall, liquids are kept inside the sample receiving compartment. This prevents reagents from being lost during handling of the sample carrier, and the sample from drying out during the staining and/or washing process, thereby making longer staining intervals possible and handling of the samples even more efficient. Furthermore, the volume of the sample receiving compartment can be kept small which is advantageous for many applications. For example, antibodies typically need to be on the sample in a very small volume for a predetermined period such as 1.5 hours, which is easy to realize in this embodiment.

According to another embodiment, at least one of the sample receiving elements comprises at least one injection port and a fluidics channel connecting the injection port to the sample receiving compartment. Via the injection port, the reagents for treating and/or manipulating as well as washing buffers for washing the sample arranged in the sample receiving compartment may be provided. This speeds up the staining and washing processes, making handling the samples arranged in the sample carrier even more efficient.

According to another embodiment, the at least one sample receiving element comprises at least one venting port and a second fluidics channel connecting the venting port to the sample receiving compartment of the at least one sample receiving element. The venting port is preferably arranged on a side of the sample receiving compartment opposite to the injection port. The venting port allows air or any other gas to escape from the sample receiving compartment when a reagent or a washing buffer is introduced into the sample receiving compartment via the injection port. This allows the reagent or a washing buffer to quickly spread throughout the sample receiving compartment due to the capillary effect. This further speeds up the staining and washing processes. Also, used reagents and/or washing buffers may be removed via the venting port.

According to another embodiment, the sample receiving elements are thermally isolated from each other. Thermally isolating the sample receiving elements allows the temperatures of neighboring sample receiving compartments to differ from each other without sample receiving compartments thermally influencing each other. For example, one of the sample receiving compartments may be heated while a neighboring sample receiving compartment may be cooled. This means that different reagents with different temperature requirements may be used at the same time in the same sample carrier. Thereby, the versatility of the sample carrier is further increased.

According to another embodiment, at least one of the sample receiving elements is configured to be removable from the frame. For example, the sample receiving elements may be removed for easier cleaning. Further, different sample receiving elements may be provided for different applications, thereby increasing the versatility of the sample carrier.

According to another embodiment, the imaging device is a microscope and the frame is configured to be received by a sample stage of the microscope. In particular, the frame has the dimensions of a microwell plate or a standard multiwell plate stage insert. This greatly increases versatility and interoperability of the sample carrier. For example, this allows the sample carrier to be used in a variety of laboratory automation systems designed to use microwell plates, such as pipetting robots.

### Short Description of the Figures

Hereinafter, specific embodiments are described referring to the drawings, wherein:
- Figure 1: is a schematic top view of a sample carrier according to an embodiment;
- Figure 2: is a schematic top view of a sample carrier according to another embodiment;
- Figure 3: is a schematic cut view of a sample receiving element of a sample carrier according to an embodiment;
- Figure 4: is a schematic cut view of the sample receiving element according to Figure 3;
- Figure 5: is a schematic cut view of another sample receiving element of a sample carrier according to another embodiment;
- Figure 6: is a schematic view of an exemplary imaging device for use with a sample carrier according to an embodiment; and
- Figure 7: is the flowchart of a method for imaging samples arranged in a sample carrier according to an embodiment.

### Detailed Description

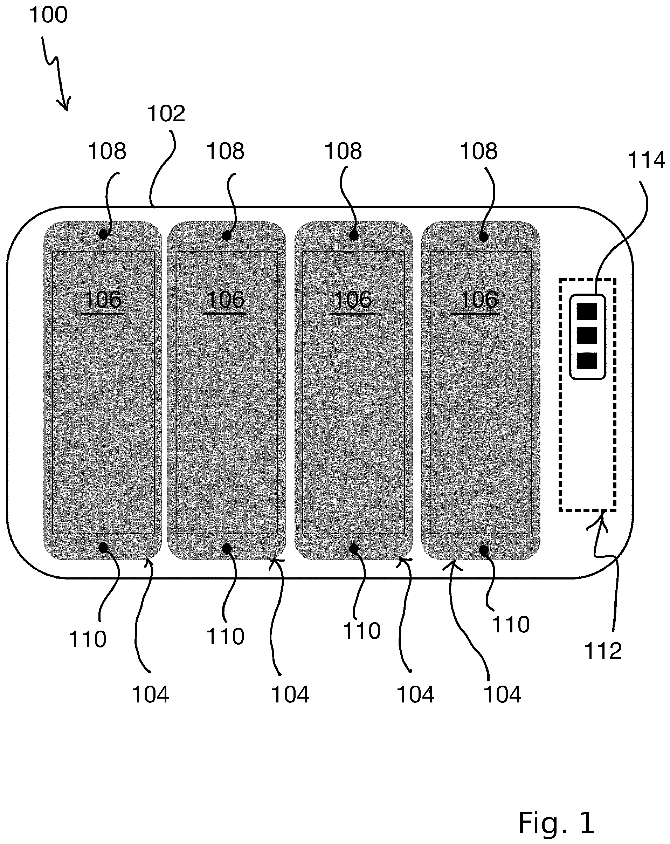

Figure 1 is a schematic top view of a sample carrier 100 according to an embodiment.

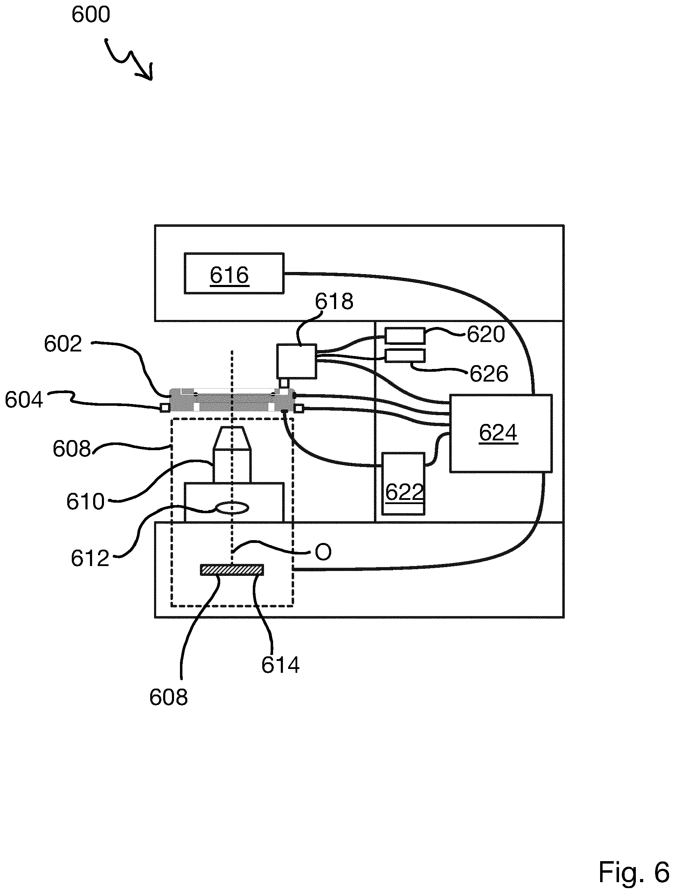

The sample carrier 100 comprises a frame 102 configured to be received by an imaging device 600 (cf. Figure 6). For example, the frame 102 may be received by a sample stage 604 of the imaging device 600. In order to increase interoperability with a number of different imaging devices, the frame 102 may be dimensioned to be compatible with standardized elements such as microwell plates or stage inserts.

According to the embodiment shown in Figure 1, the sample carrier 100 comprises four sample receiving elements 104. Each of the sample receiving elements 104 comprises a sample receiving compartment 106 configured to receive a sample. In the present embodiment, each of the sample receiving compartments 106 is configured to receive a sample prepared on a microscope slide. Each sample receiving element 104 also comprises an injection port 108 for introducing a fluid, such as a reagent, marker or washing buffer, into the sample receiving compartment 106. In Figure 1, the injection port 108 is arranged above the sample receiving compartment 106. Each sample receiving element 104 further comprises a venting port 110 through which a gas, for example air, can escape the sample receiving compartment 106 when the fluid is introduced into the sample receiving compartment 106. In Figure 1, the venting port 110 is arranged below the sample receiving compartment 106. The injection ports 108 and the venting ports 110 are each arranged on opposite sides of the sample receiving compartments 106.

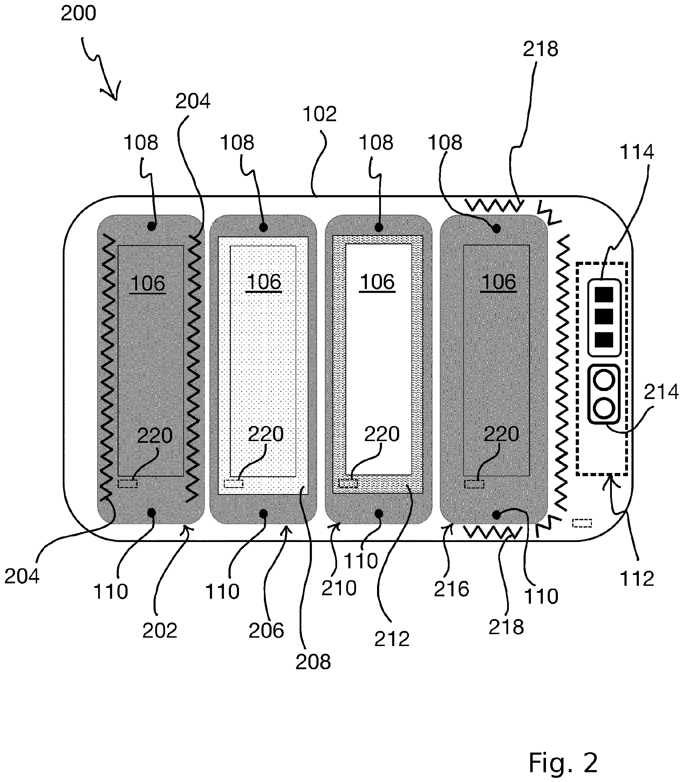

The sample carrier 100 further comprises a temperature control unit 112 configured to control the temperature of each of the sample receiving compartments 106 individually. By means of the temperature control unit 112, a user may very precisely control the temperature of each of the samples. Precise temperature control is in particular vital during the annealing step of a staining, washing, and imaging cycle, since reagents and markers used for staining are often highly sensitive to temperature. The temperature control unit 112 further comprises an external interface 114 for receiving electrical power from an external power source, and for receiving control signals, for example from a controller 624 of the imaging device 600 (c.f. Figure 6). The temperature control unit 112 is described in more detail below with reference to Figure 2.

Figure 2 is a schematic top view of a sample carrier 200 according to another embodiment.

According to the present embodiment, a first sample receiving element 202 shown to the left in Figure 2 comprises a first heating element 204 of the temperature control unit 112. The first heating element 204 is exemplary formed as an electric heating element that is configured to convert electrical power into heat, for example a cartridge heater. For providing electrical power, the first heating element 204 is connected to the external interface 114 of the sample carrier 200. For the sake of clarity, no connections are shown in Figure 2.

A second sample receiving element 206 shown to the center left in Figure 2 comprises a second heating element 208 of the temperature control unit 112. The second heating element 208 is exemplary formed as a heating foil that is wrapped around the sample receiving compartment 106 of the second sample receiving element 206. The second heating element 208 is configured to convert electrical power into heat, and is connected to the external interface 114 of the sample carrier 200.

A third sample receiving element 210 shown to the center right in Figure 2 comprises a liquid channel 212 for a liquid. The liquid channel 212 encompasses the sample receiving compartment 106 of the third sample receiving element 210 and is connected to a liquid interface 214 of the temperature control unit 112. The liquid interface 214 provides the liquid from an external liquid source 622 to the liquid channel 212. The liquid received in the liquid channel 212 may be heated or cooled to control the temperature of the sample receiving compartment 106 of the third sample receiving element 210. Heating or cooling of the liquid may in particular be performed by the external liquid source 622 (cf. Figure 6).

A fourth sample receiving element 216 is shown to the right in Figure 2. The frame 102 surrounding the fourth sample receiving element 216 comprises a third heating element 218. The third heating element 218 is arranged such that it heats the fourth sample receiving element 216, and thereby the sample receiving compartment 106 of the fourth sample receiving element 216. The third heating element 218 is exemplary formed as an electric heating element that is configured to convert electrical power into heat. For providing electrical power, the third heating element 218 is connected to the external interface 114 of the sample carrier 200.

Each of the sample receiving elements 202, 206, 210, 216 further comprises a temperature sensor 220. Each temperature sensor 220 is configured to measure the current temperature of the sample receiving compartment 106 of the respective sample receiving element 202, 206, 210, 216. The temperature sensors 220 are connected to the external interface 114, thereby allowing the controller 624 of the imaging device 600 to receive the current temperature. This allows a much more precise control of the first, second, and third heating elements 204, 208, 218 as well as the external liquid source 622 which controls the temperature of the liquid used to heat or cool the sample receiving compartment 106 of the third sample receiving element 210.

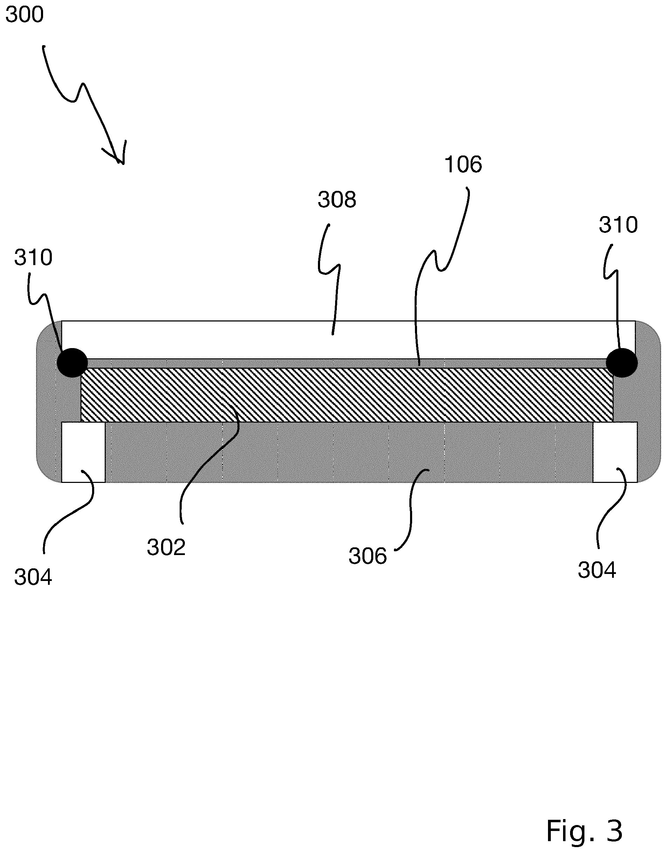

Figure 3 is a schematic cut view of a sample receiving element 300 of a sample carrier according to an embodiment.

The cut in Figure 3 runs along the width of the sample receiving element 300, i.e. from left to right in the schematic top views of Figures 1 and 2. The sample receiving element 300 is shown in Figure 3 without the surrounding frame 102 for sake of clarity.

The sample receiving element 300 is configured to receive a microscope slide 302 on which a sample is prepared. The sample receiving element 300 comprises support portions 304 for holding the microscope slide 302. The support portions 304 are arranged around the edge of an opening 306 through which the sample arranged on the microscope slide 302 can be observed. Thus, when the microscope slide 302 is received in the sample receiving element 300, the microscope slide 302 is suspended above the opening 306 allowing an unobstructed observation of the sample from below.

The sample receiving element 300 further comprises a removable lid 308 arranged atop the microscope slide 302. The lid 308 covers the sample from above, thereby protecting the sample. The lid 308 may be transparent, allowing the user to observe the sample from above and to image the sample through the lid 308. The microscope slide 302 and the lid 308 define the sample receiving compartment 106 of the sample receiving element 300 in which the sample is received. The microscope slide 302 forms a first wall at the bottom of the sample receiving compartment 106, and the lid 308 forms a second wall at the top of the sample receiving compartment 106. A spacer element 310 is arranged between the microscope slide 302 and the lid 308, thereby preventing the microscope slide 302 and the lid 308 from being pushed together and crushing the sample. The spacer element 310 runs around the sample receiving compartment 106 and forms a seal that prevents fluids from entering or escaping the sample receiving compartment 106.

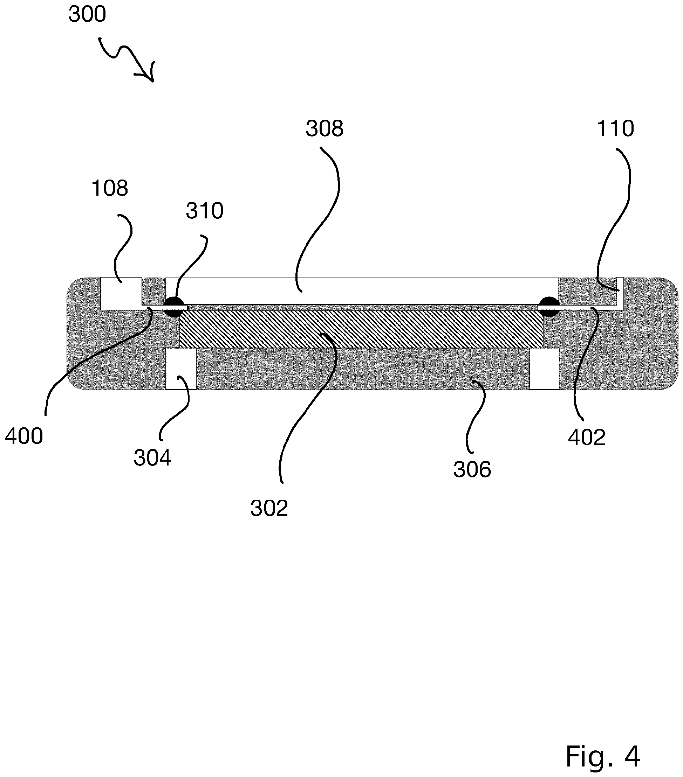

Figure 4 is a schematic cut view of the sample receiving element 300 according to Figure 3.

The cut in Figure 4 runs along the length of the sample receiving element 300, i.e. from top to bottom in the schematic top views of Figures 1 and 2. The sample receiving element 300 is shown in Figure 4 without the surrounding frame 102 for sake of clarity.

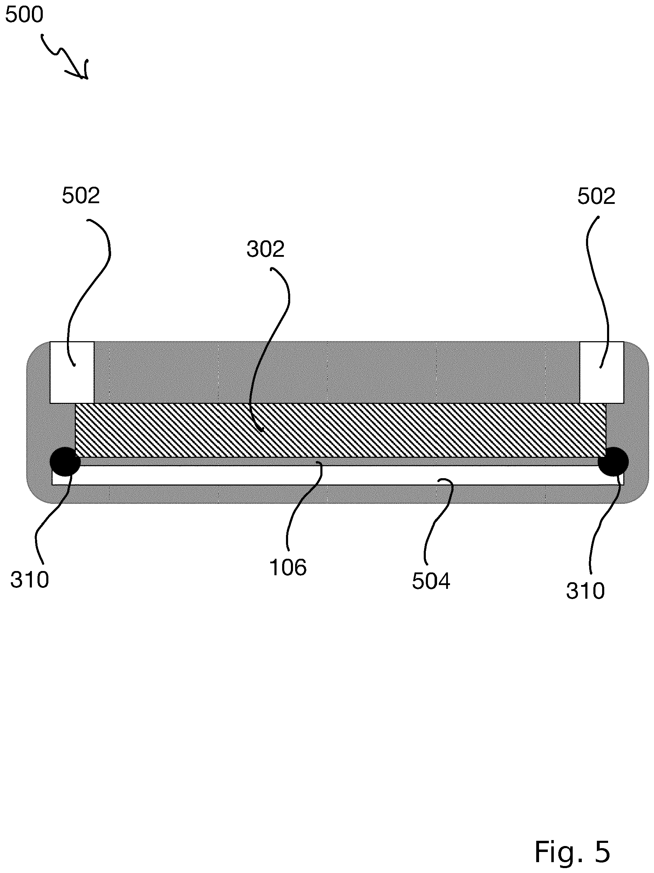

As can be seen in Figure 4, the sample receiving element 300 has a fluidics system that comprises the injection port 108, a first fluidics channel 400, a second fluidics channel 402, and the venting port 110. The injection port 108 and the venting port 110 are arranged on opposite sides of the sample receiving compartment 106. The injection port 108 is arranged to the left of the sample receiving compartment 106 in Figure 5, and connected to the sample receiving compartment 106 by the first fluidics channel 400. The venting port 110 is arranged to the right of the sample receiving compartment 106 in Figure 5, and connected to the sample receiving compartment 106 by the second fluidics channel 402. Both the first fluidics channel 400 and the second fluidics channel 402 run through the spacer element 310. Via the injection port 108, various liquids such as reagents or washing buffers may be introduced into the sample receiving compartment 106. Any liquid or gas already inside the sample receiving compartment 106 may escape through the venting port 110.

Figure 5 is a schematic cut view of another sample receiving element 500 of a sample carrier according to an embodiment.

The cut in Figure 5 runs along the width of the sample receiving element 500, i.e. from left to right in the schematic top views of Figures 1 and 2. The sample receiving element 500 is shown in Figure 5 without the surrounding frame 102 for sake of clarity.

The sample receiving element 500 according to Figure 5 is distinguished from the sample receiving element 300 according to Figures 3 and 4 in that the microscope slide 302 is arranged above the sample receiving compartment 106. As in the sample receiving element 300 according to Figures 3 and 4, the microscope slide 302 forms the first wall of the sample receiving compartment 106. In the present embodiment, the microscope slide 302 is held in place by holding portions 502 arranged atop the microscope slide 302. To allow the microscope slide 302 to be removed, the holding portions 502 may be designed to be detachable or flexible.

The sample receiving element 500 further comprises an optically transparent element 504 arranged at the bottom of the sample receiving compartment 106. The optically transparent element 504 is exemplary formed as a plane-parallel plate, and forms the second wall of the sample receiving compartment 106 in this embodiment. The optically transparent element 504 forms a window through which the sample may be observed from below.

In the present embodiment, the spacer element 310 is arranged between the microscope slide 302 and the optically transparent element 504, preventing the microscope slide 302 and the optically transparent element 504 from being pushed together. Like in the sample receiving element 300 according to Figure 3 the spacer element 310 also forms a seal around the sample receiving compartment 106 in the present embodiment.

Figure 6 is a schematic view of an exemplary imaging device 600 for use with a sample carrier 602 according to an embodiment.

The imaging device 600 may also be used with any of the sample carriers 100, 200 described above with reference to Figures 1 to 5. In Figure 6, the imaging device 600 is only exemplary used with the sample carrier 602.

A sample stage 604 of the imaging device 600 has an opening in which the sample carrier 602 is received. The sample stage 604 is exemplary formed as an X-Y-table allowing the sample carrier 602 to be positioned freely in a plane perpendicular to an optical axis O of the imaging device 600.

The imaging device 600 is exemplary formed to be an inverse microscope, and comprises an optical detection system 608 configured to image the samples arranged in the sample carrier 602. The optical detection system 608 comprises a microscope objective 610, a tube lens 612, and a detector element 614. The microscope objective 610 is arranged below the sample stage 604 and the sample carrier 602, and directed at the currently observed sample. The microscope objective 610 defines the optical axis O of the imaging device 600, and is configured to receive detection light emitted by the currently observed sample. The received detection light is directed via the tube lens 612 onto the detector element 614. The detector element 614 is configured to generated an image of the currently observed sample from the detection light. By positioning the sample carrier 602 with the sample stage 604, the user may select which of the samples arranged in the sample carrier 602 is currently observed.

The imaging device 600 further comprises an illumination system 616 exemplary arranged atop the sample stage 604 and the sample carrier 602. The illumination system 616 is configured to illuminate the currently observed sample. In particular, the illumination system 616 is also be configured to emit excitation light for exciting fluorophores located in the currently observed sample. To this end, the illumination system 616 may comprise one or more laser light sources. The illumination system 616 may further comprise optical elements configured to direct illumination light and/or the excitation light onto the currently observed sample. In particular, the illumination system 616 may comprise a scanning unit configured to selectively direct the excitation light onto different regions of the currently observed sample. However, the illumination system 616 may also be configured for conventional white light illumination.

A fluid dispenser 618 of the imaging device 600 is configured to engage with injection ports 108 of the sample carrier 602. The fluid dispenser 618 may selectively inject fluids, such as reagents, markers and washing buffers, into the sample receiving compartments 106 via the injection ports 108 connected with each of the sample receiving compartments 106. The fluids are provided by an internal fluid storage 620 to which the fluid dispenser 618 is connected. The fluid dispenser 618 may further be configured to drain the fluids from the sample receiving compartments 106 via the injection ports 108 back into an internal fluid drain 626 which collects the used fluids. Alternatively, the used fluids can also be drained from the sample receiving compartments 106 by connecting the fluid drain through a valve directly to the injection ports 108 or to the venting ports 110. Furthermore, the fluid storage 620 and/or the fluid drain 626 may also be located outside the imaging device 600.

The external liquid source 622 for providing the heated or cooled liquid is exemplary located inside the imaging device 600 and is connected to the liquid port of the sample carrier 602.

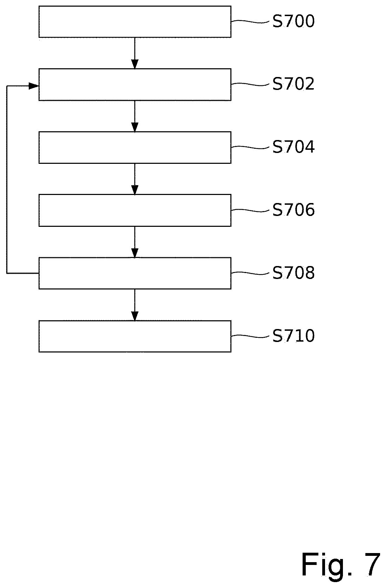

The imaging device 600 further comprises a controller 624 that is connected to the sample stage 604, the optical detection system 608, the illumination system 616, the fluid dispenser 618, and the external liquid source 622. The controller 624 is configured to control the aforementioned elements. In particular, the controller 624 is configured to perform a method for imaging the samples arranged in the sample carrier 602. The method will be described below with reference to Figure 7.

Figure 7 is the flowchart of a method for imaging samples arranged in a sample carrier according to an embodiment.

The method may in particular be performed with the imaging device 600 according to Figure 6. Any of the sample carriers described above with reference to Figures 1 to 5 may be used in the method.

The process is started in step S700. In step S702 the samples are stained with one of more reagents by introducing the reagents into the sample receiving compartments 106 via the injection ports 108. Reagents may include but are not limited to probes, antibodies or chemicals. The reagents may in particular comprise fluorophores. In this case, the reagent is also referred to as a marker.

In step S704 the reagents are annealed by adjusting the temperature of the sample receiving compartments 106 with the temperature control unit 112 to the specific needs of each reagent. During the annealing step the reagents either bind to specific structures in the samples or react in other ways with the sample. How well the reagents bind to the specific structures, i.e. the specificity of the reagents, depends on how well the temperature needs of the reagents are met. Since the temperature control unit 112 can adjust the temperature of the sample receiving compartments 106 individually, many different reagents having different temperature requirements during the annealing step may be used at the same time.

In step S706 the sample is washed with a washing buffer in order to remove unbound antibodies or reagent residues that prevent proper imaging. The washing buffer might be introduced into the sample receiving compartments 106 via the injection ports 108. In step S708 the samples are imaged. The imaging step may comprise exciting fluorophores located in the sample with excitation light.

The process is ended in step S710.

Steps S702 to S708 comprise a single staining, washing, and imaging cycle and may be repeated with different reagents in order to image additional features of the samples. A single marker may be identical in all cycles as a reference for aligning other markers in the imaging step.

Identical or similarly acting elements are designated with the same reference signs in all Figures. As used herein the term "and/or" includes any and all combinations of one or more of the associated listed items and may be abbreviated as "/". Individual features of the embodiments and all combinations of individual features of the embodiments among each other as well as in combination with individual features or feature groups of the preceding description and/or claims are considered disclosed.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of Reference Signs

- 100: Sample carrier
- 102: Frame
- 104: Sample receiving element
- 106: Sample receiving compartment
- 108: Injection port
- 110: Venting port
- 112: Temperature control unit
- 114: External interface
- 200: Sample carrier
- 202: Sample receiving element
- 204: Heating element
- 206: Sample receiving element
- 208: Heating element
- 210: Sample receiving element
- 212: Liquid channel
- 214: Liquid interface
- 216: Sample receiving element
- 218: Heating element
- 220: Temperature sensor
- 300: Sample receiving element
- 302: Microscope slide
- 304: Support portion
- 306: Opening
- 308: Lid
- 310: Spacer element
- 400, 402: Fluidics channel
- 500: Sample receiving element
- 502: Holding portion
- 504: Optically transparent element
- 600: Imaging device
- 602: Sample carrier
- 604: Sample stage
- 606: Opening
- 608: Optical detection system
- 610: Microscope objective
- 612: Tube lens
- 614: Detector element
- 616: Illumination system
- 618: Fluid dispenser
- 620: Fluid storage
- 622: External liquid source
- 624: Controller
- 626: Fluid drain
- O: Optical axis

## Claims

1. A sample carrier (100, 200, 602) for an imaging device (600), comprising
at least two sample receiving elements (104, 202, 206, 210, 216, 300, 500), each sample receiving element (104, 202, 206, 210, 216, 300, 500) having a sample receiving compartment (106) configured to receive a sample, wherein the sample receiving elements (104, 202, 206, 210, 216, 300, 500) are either arranged in or form a frame (102), the frame (102) being configured to be received in the imaging device (600); and
a temperature control unit (112) configured to control the temperature of each of the sample receiving compartments (106) individually.

2. The sample carrier (100, 200, 602) according to claim 1, wherein the temperature control unit (112) is configured to heat and/or cool each of the sample receiving compartments (106) individually.

3. The sample carrier (100, 200, 602) according to claim 1 or 2, wherein the temperature control unit (112) comprises at least two heating elements (204, 208, 218), each heating element (204, 208, 218) being configured to heat one of the sample receiving compartments (106).

4. The sample carrier (100, 200, 602) according to claim 3, wherein each of the sample receiving elements (202, 206, 300, 500) comprises one of the heating elements (204, 208).

5. The sample carrier (100, 200, 602) according to claim 3, wherein each heating element (218) is arranged in the frame (102) at or next to one of the sample receiving elements (216, 300, 500).

6. The sample carrier (100, 200, 602) according to any one of the claims 3 to 5, wherein the temperature control unit (112) comprises a power interface (114) configured to be connected to an external electrical power source, and to relay electrical power provided by the electrical power source to each of the heating elements (204, 208, 218).

7. The sample carrier (100, 200, 602) according to any one of the preceding claims, wherein the temperature control unit (112) comprises a liquid interface (214) configured to be connected to an external liquid source (622), and is configured to selectively direct a liquid received via the liquid source around each of the sample receiving compartments (106) in order to control the temperature of each of the sample receiving compartments (106) independently.

8. The sample carrier (100, 200, 602) according to any one of the preceding claims, wherein the temperature control unit (112) comprises at least one temperature sensor (220) configured to measure the temperature of at least one of the sample receiving compartments (106).

9. The sample carrier (100, 200, 602) according to any one of the preceding claims, wherein the temperature control unit (112) comprises a control interface (114) configured to be connected to a control unit of the imaging device (600).

10. The sample carrier (100, 200, 602) according to any one of the preceding claims, wherein at least one of the sample receiving elements (104, 202, 206, 210, 216, 300, 500) is configured to receive a microscope slide (302), the microscope slide (302) defining a first wall of the sample receiving compartment (106) of the at least one sample receiving element (104, 202, 206, 210, 216, 300, 500) when the microscope slide (302) is received in the sample receiving element (104, 202, 206, 210, 216, 300, 500).

11. The sample carrier (100, 200, 602) according to claim 10, wherein the at least one sample receiving element (104, 202, 206, 210, 216, 300) comprises a lid (308) configured to cover the sample receiving compartment (106); and wherein the lid (308) defines a second wall of the sample receiving compartment (106) of the at least one sample receiving element (104, 202, 206, 210, 216, 300) when the lid (308) covers the sample receiving compartment (106), the second wall being arranged on a side of the sample receiving compartment (106) opposite to the first wall.

12. The sample carrier (100, 200, 602) according to claim 10, wherein the at least one sample receiving element (104, 202, 206, 210, 216, 500) comprises an optically transparent element (504) for observing the sample received in the sample receiving compartment (106) of the at least one sample receiving element (104, 202, 206, 210, 216, 500); and wherein the optically transparent element (504) defines a second wall of the sample receiving compartment (106) of the at least one sample receiving element (104, 202, 206, 210, 216, 500), the second wall being arranged on a side of the sample receiving compartment (106) opposite to the first wall.

13. The sample carrier (100, 200, 602) according to claim 11 or 12, wherein the at least one sample receiving element (104, 202, 206, 210, 216, 300, 500) comprises at least one spacer element (310) defining a predetermined distance between the first wall and the second wall.

14. The sample carrier (100, 200, 602) according to claim 13, wherein the spacer element (310) extends around the sample receiving compartment (106) of the at least one sample receiving element (104, 202, 206, 210, 216, 300, 500) and forms a seal.

15. The sample carrier (100, 200, 602) according to any one of the preceding claims, wherein at least one of the sample receiving elements (104, 202, 206, 210, 216, 300, 500) comprises at least one injection port (108) and a fluidics channel (400) connecting the injection port (108) to the sample receiving compartment (106).

16. The sample carrier (100, 200, 602) according to claim 15, wherein the at least one sample receiving element (104, 202, 206, 210, 216, 300, 500) comprises at least one venting port (110) and a second fluidics channel (402) connecting the venting port (110) to the sample receiving compartment (106) of the at least one sample receiving element (104, 202, 206, 210, 216, 300, 500), the venting port (110) preferably being arranged on a side of the sample receiving compartment (106) opposite to the injection port (108).

17. The sample carrier (100, 200, 602) according to any one of the preceding claims, wherein the sample receiving elements (104, 202, 206, 210, 216, 300, 500) are thermally isolated from each other.

18. The sample carrier (100, 200, 602) according to any one of the preceding claims, wherein at least one of the sample receiving elements (104, 202, 206, 210, 216, 300, 500) is configured to be removable from the frame (102).

19. The sample carrier (100, 200, 602) according to any one of the preceding claims, wherein the imaging device (600) is a microscope and the frame (102) is configured to be received by a sample stage (604) of the microscope.
